# EUROPEAN PATENT APPLICATION

(11) **EP 2 182 353 A1**
(43) Date of publication of application: **05.05.2010**
(21) Application number: 08752421.1
(22) Date of filing: 08.05.2008
(51) Int. Cl.: G01N 30/60, G01N 30/64, G01N 30/74, G01N 30/88

(54) **CHROMATOGRAPHIC DETECTION DEVICE**

(30) Priority: 24.08.2007 JP 2007217932
(71) Applicant: Tokyo Electron Limited, Tokyo 107-6325 (JP)
(72) Inventor: KIYOMOTO, Tomofumi, Amagasaki-shi Hyogo 660-0891 (JP); HARADA, Muneo, Amagasaki-shi Hyogo 660-0891 (JP); ONO, Katsuyuki, Amagasaki-shi Hyogo 660-0891 (JP)
(74) Representative: Manitz, Finsterwald & Partner GbR
(86) International application number: PCT/JP2008/058530
(87) International publication number: WO 2009/028238

(57) **Abstract**

A chromatography detector 11 includes a base substrate 12 having a main surface 12a and a column flow path 15 formed on the main surface 12a, and a substrate block 13 and 14, which has a detection space 18 communicating with an outlet of the column flow path 15 and is stacked on the main surface 12a of the base substrate 12 so as to close a top surface of the column flow path 15.

## Description

### [Technical Field]

The present invention relates to a chromatography detector for detecting components of a sample separated by a chromatography; and in particular, relates to a chromatography detector for analyzing a very small amount of sample.

### [Background Art]

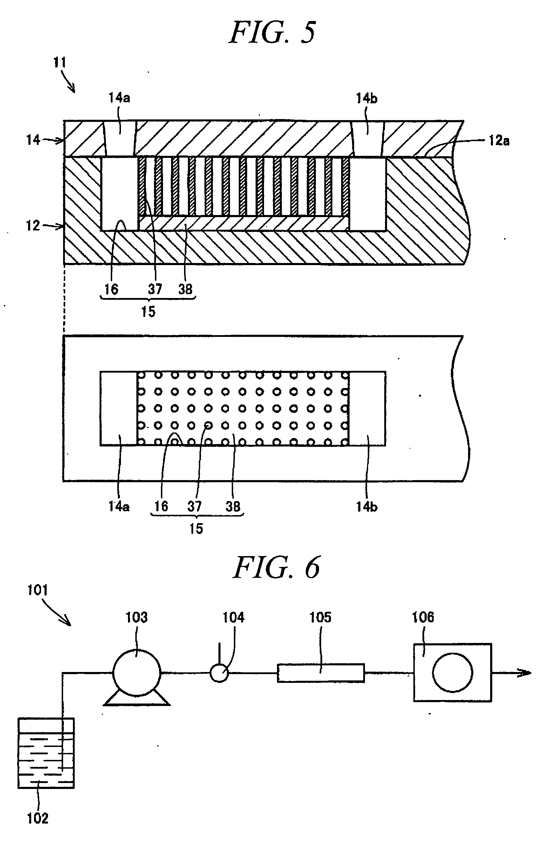

A conventional chromatography device 101 is disclosed in, for example, Japanese Patent Laid-open Publication No. 2000-329757. With reference to Fig. 6, the chromatography apparatus 101 disclosed in the above Publication includes a sample tube 102, a pump 103, a sample injection device 104, a column 105 and a detector 106.

The chromatography apparatus 101 allows a mobile phase, which has a plurality of components mixed therein, in the sample tube 102 to flow to the sample injection device 104 by using the pump 103. Then, the mobile phase is injected from the sample injection device 104 into the column 105 having a stationary phase packed therein. The mobile phase passing through the column 105 interacts with the stationary phase to be separated into each component. Further, it is described that each component separated in the column 105 is introduced into the detector 106 in sequence and then analysis thereof is performed.

When analyzing a very small amount of the mobile phase in the chromatography apparatus 101 configured as stated above, there occurs a problem of a resolution decrease due to diffusion of the mobile phase, or the like.

### [Disclosure of the Invention]

Here, in view of the foregoing, there is provided a chromatography detector capable of accurately analyzing even a very small amount of mobile phase.

A chromatography detector in accordance with the present invention includes: a base substrate having a main surface and a column flow path formed on the main surface; and a substrate block, which receives a detection module and has a detection space communicating with an outlet of the column flow path and is stacked on the main surface of the base substrate so as to close a top surface of the column flow path.

The chromatography detector having the above configuration includes, in the inside of the stacked structure, the column flow path for separating a sample into each component and the detection space for analyzing each of the separated components. With this structure, the chromatography detector can be miniaturized and have portability. Further, by omitting a tube for connecting the column flow path with the detection space, it is possible to obtain the chromatography detector having high accuracy capable of suppressing a resolution decrease due to a re-mix of the sample, or the like.

Desirably, the column flow path includes a groove and an obstacle disposed within the groove. Further, desirably, the column flow path is formed by a semiconductor process. As an example, the obstacle is a plurality of pillars protruding from a wall surface of the groove. As another example, the obstacle is a plurality of carbon nanotubes protruding from a wall surface of the groove.

In the chromatography detector having the above configuration, the groove functions as a column in a chromatography. Further, the obstacle functions as a stationary phase in the chromatography. Furthermore, if the column flow path is formed by using the semiconductor process, it is possible to obtain the chromatography detector having a subminiature size and high accuracy.

As an example, the substrate block includes: a detection substrate having the detection space; and a connection substrate, which is disposed between the base substrate and the detection substrate and has a connection flow path for connecting the outlet of the column flow path with an inlet of the detection space.

Desirably, the base substrate and the detection substrate are made of silicon. Further, the connection substrate is made of glass containing movable ions. In addition, at least one of the base substrate and the connection substrate, and the detection substrate and the connection substrate is bonded by an anodic bonding. In order to securely prevent the leakage of the sample at a bonding portion between the base substrate and the connection substrate and a bonding portion between the detection substrate and the connection substrate, the anodic bonding is appropriate.

Further, the detection substrate made of silicon can be processed by a lithography process such as an etching or the like. Furthermore, the connection substrate made of glass material can be processed by a sand blast or the like. By employing these processes, it is possible to obtain the chromatography detector having a subminiature size and high accuracy.

Desirably, the chromatography detector further includes: a detection module, which has a detection flow path where a mobile phase passes through and is detachably held in the detection space. As an example, the detection module measures absorbance or electrical conductivity of the mobile phase passing through the detection flow path. In the chromatography detector having the above configuration, it is possible to select an appropriate detection module according to the target to be analyzed. For example, in case of an organic material, it is desirable to irradiate ultraviolet (UV) to measure absorbance. Further, in case of a material containing ions, it is desirable to measure electrical conductivity.

Further, it is desirable that wall surfaces of the substrate block and sidewalls of the detection module surrounding the detection space are inclined at predetermined angles with respect to an entering direction of the detection module, respectively. Here, the problem is positioning of the detection module when attaching or detaching it. If the sidewalls of the detection module and the wall surfaces of the detection space receiving the detection module are formed to have predetermined inclined surfaces in advance, the positioning can be carried out only by fitting and inserting the detection module into the detection space.

In accordance with the present invention, in the inside of the stacked structure, provided are the column flow path for separating the sample into each component and the detection space for analyzing each of the separated components. With this structure, it is possible to obtain the chromatography detector capable of accurately analyzing even a very small amount of mobile phase.

### [Brief Description of the Drawings]

Fig. 1 is a cross-sectional view taken along line I-I of Fig. 2;
Fig. 2 is a plane view of a chromatography detector in accordance with an embodiment of the present invention;
Fig. 3 is a view showing a state in which a detection module is installed in a detection space;
Fig. 4 is a view showing an example of a supply cylinder;
Fig. 5 is a view showing a modification example of Fig. 1; and
Fig. 6 is a view showing a conventional chromatography detector.

### [Best Mode for Carrying out the Invention]

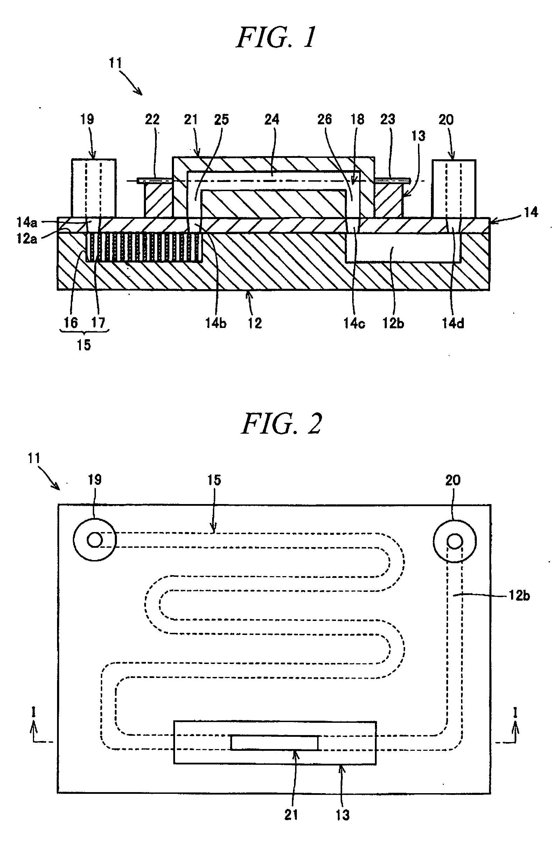

With reference to Figs. 1 and 2, a chromatography detector 11 in accordance with an embodiment of the present invention will be explained. Further, Fig. 1 is a cross-sectional view taken along line I-I of Fig. 2, and Fig. 2 is a plane view of the chromatography detector 11.

The chromatography detector 11 is a stacked structure of a base substrate 12, a detection substrate 13 and a connection substrate 14. Further, in the present embodiment, installed are a supply cylinder 19, a discharge cylinder 20 and a detection module 21.

The base substrate 12 has a column flow path 15 and a discharge flow path 12b on its main surface 12a (top surface of Fig. 1). The column flow path 15 includes a groove 16 formed at the main surface 12a and a plurality of pillars 17 protruding from a bottom wall of the groove 16. The column flow path 15 functions as a column for separating a mobile phase into each component in a chromatography. Further, the pillars 17 function as a stationary phase (obstacle) in the chromatography.

Furthermore, the column flow path 15 in the present embodiment, as illustrated in Fig. 2, is formed in a zigzag shape at the main surface 12a of the base substrate 12. In addition, since a top surface of the column flow path 15 is closed by the connection substrate 14, the column flow path 15 is indicated by a dashed line in Fig. 2. Furthermore, the pillars 17 are omitted in Fig. 2.

The detection substrate 13 receives the detection module 21, and has a detection space 18 communicating with an outlet of the column flow path 15. To be specific, in the detection substrate 13, formed is a through hole passing therethrough in its thickness direction. Further, the inside of the through hole becomes the detection space 18.

The connection substrate 14 is disposed between the base substrate 12 and the detection substrate 13, and closes the top surface of the column flow path 15 and a top surface of the discharge flow path 12b, and has a plurality of connection flow paths 14a, 14b, 14c and 14d passing therethrough in its thickness direction. To be specific, a first connection flow path 14a connects the supply cylinder 19 with an inlet of the column flow path 15. A second connection flow path 14b connects the outlet of the column flow path 15 with an inlet of the detection space 18. A third connection flow path 14c connects an outlet of the detection space 18 with an inlet of the discharge flow path 12b. A fourth connection flow path 14d connects an outlet of the discharge flow path 12b with the discharge cylinder 20.

In the chromatography detector 11 configured as stated above, a sample to be analyzed is supplied from the supply cylinder 19 to the column flow path 15. In the column flow path 15, the sample is separated into a plurality of components by interaction between the sample serving as the mobile phase and the pillars 17 serving as the stationary phase. Each component separated from the sample in the column flow path 15 is introduced into the detection space 18, and then analyzed by the detection module 21. Thereafter, the analyzed sample is discharged to an exterior via the discharge flow path 12b and the discharge cylinder 20.

The chromatography detector 11 configured as stated above includes, in the inside of the stacked structure, the column flow path 15 for separating the sample into each component and the detection space 18 for analyzing each of the separated components. With this structure, the chromatography detector 11 can be miniaturized and have portability. Further, the column flow path 15 for separating the sample into each component is directly connected to the detection space 18 for analyzing each of the separated components. In this manner, by omitting a tube for connecting the column flow path 15 with the detection space 18, it is possible to obtain the chromatography detector 11 having high accuracy capable of suppressing a resolution decrease due to a re-mix of the sample, or the like. In particular, an advantageous effect can be expected when the present invention is applied to the chromatography detector 11 having a subminiature size.

Furthermore, in the above-stated embodiment, there has been illustrated an example of the chromatography detection module 11 in which the base substrate 12, the connection substrate 14 and the detection substrate 13 are stacked in sequence from the bottom, but it is not limited thereto, and the sequence thereof may be reversed.

Further, there has been shown an example in which the sample that has passed through the detection space 18 is discharged to the exterior via the third connection flow path 14c, the discharge flow path 12b, the fourth connection flow path 14d and the discharge cylinder 20, but it may be possible to discharge the sample directly to the exterior from the detection space 18 without passing through other paths.

Furthermore, in the above-stated embodiment, there has been shown an example in which the detection substrate 13 and the connection substrate 14 are formed separately in consideration of the processability, but it is not limited thereto, but it may be a substrate block into which both of these substrates are integrally formed. Further, the supply cylinder 19 and the discharge cylinder 20 are not essential components, so that they may be omitted.

The detection module 21 includes a detection flow path 24 extended in a horizontal direction from the inside of the detection space 18, and intersection flow paths 25 and 26 extended in a direction intersecting with the detection flow path 24 so as to be connected with the second and third connection flow paths 14b and 14c of the connection substrate 14. Further, at the outside of the detection module 21, there are provided an irradiation unit 22 for irradiating light toward the detection flow path 24 and a light receiving unit (detector) 23 for receiving the light coming out of the detection flow path 24. Further, the detection module 21 is made of, e.g., quartz. Furthermore, the irradiation unit 22 and the light receiving unit 23 are optical fibers which irradiate and receive ultraviolet (UV).

The irradiation unit 22 irradiates the ultraviolet in parallel with the detection flow path 24 from the left side of the detection module 21. In the present embodiment, a wavelength of the ultraviolet is set to be about 200 nm to 300 nm. The light receiving unit 23 receives transmitted light which has passed through the detection flow path 24. Further, by analyzing the ultraviolet received by the light receiving unit 23, absorbance of the sample passing through the detection flow path 24 is measured. Furthermore, a proceeding direction of the ultraviolet is indicated by a dashed dotted line in Fig. 1.

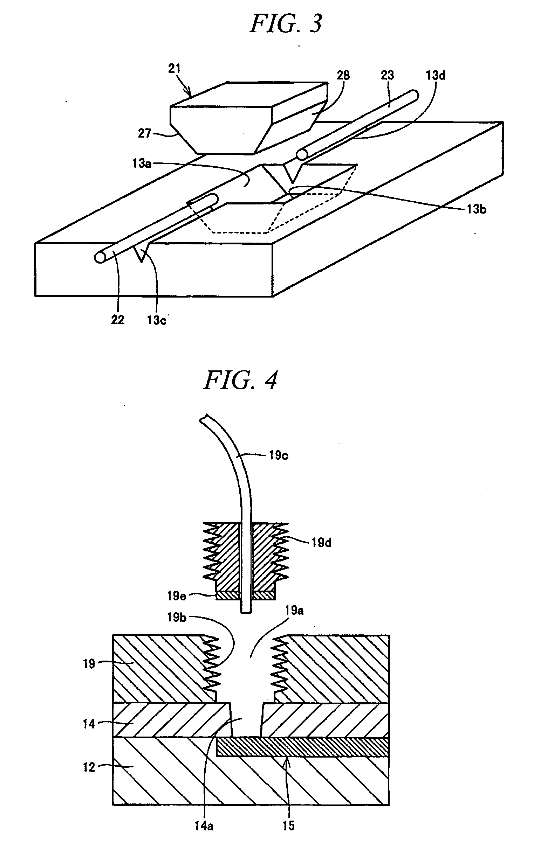

With reference to Fig. 3, a pair of sidewalls 27 and 28 of the detection module 21 facing each other are inclined surfaces which are inclined at a predetermined angle with respect to an entering direction of the detection module 21 (vertical direction in Fig. 3). Meanwhile, sidewalls 13a and 13b of the detection substrate 13 (wall surfaces surrounding the detection space 18) receiving the detection module 21 are also inclined surfaces which are inclined at a predetermined angle with respect to the entering direction of the detection module 21. Further, the detection substrate 13 functions as an optical bench allowing the detection module 21 to be easily positioned. Furthermore, in the present embodiment, the inclined angle of the sidewalls 27 and 28 is about 55 degrees, and the inclined angle of the wall surfaces 13a and 13b is about 54.7 degrees.

With the above configuration, simply by mounting the detection module 21 in the detection space 18, it is possible to position the detection module 21 so that the intersection flow paths 25 and 26 communicate with the second and third connection flow paths 14b and 14c of the connection substrate 14.

Furthermore, in the detection substrate 13, formed are V-shaped grooves 13c and 13d for positioning the irradiation unit 22 and the light receiving unit 23. These V-shaped grooves 13c and 13d serve as positioning grooves for positioning the irradiation unit 22 and the light receiving unit 23 on the detection substrate 13, and are set in advance so that the irradiation unit 22, the detection flow path 24 and the light receiving unit 23 are arranged on the same straight line. As a result, the positioning of the detection module 21 becomes easier.

The detection module 21 having the above configuration is detachably held by the detection substrate 13 so that, as illustrated in Fig. 3, the positioning thereof is very simple. Accordingly, it is possible to select an optimum detection module according to the type of sample to be detected.

To be specific, the detection module 21 is an apparatus for analyzing components of a sample by using an optical detection method, so it is appropriate for analyzing an organic material. Further, in an analysis of a material containing ions, an apparatus for analyzing components of a sample by using an electrical detection method may be employed. Furthermore, an apparatus for analyzing components of a sample by using all of the detection methods such as physical and chemical detection methods or the like may be selected.

Hereinafter, the supply cylinder 19 will be explained with reference to Fig. 4. Further, since a structure of the discharge cylinder 20 is same as that of the supply cylinder 19, an explanation thereof will be omitted. In the inside of the supply cylinder 19, formed is a supply flow path 19a passing therethrough in a vertical direction. Further, a female screw 19b is formed at an outer wall of the supply flow path 19a. Furthermore, the supply cylinder 19 is mounted on the connection substrate 14 so that the supply flow path 19a is communicated with the first connection flow path 14a.

A tube 19c for supplying the sample from the exterior is installed in the supply cylinder 19. A male screw 19d corresponding to the female screw 19b is installed at the tube 19c, and the male screw 19d is screw-coupled to the female screw 19b so that the tube 19c is fixed to the supply cylinder 19. Furthermore, at a front end of the tube 19c, installed is an O-ring 19e for preventing leakage of the sample. In this manner, by forming the female screw 19b at an inner diameter surface of the supply cylinder 19, a tube 19c having the male screw 19d sold on the market can be connected thereto as it is. As a result, compatibility of the chromatography detector 11 is enhanced.

Next, a manufacturing method of the chromatography detector 11 shown in Fig. 1 will be explained.

First, in the present embodiment, the base substrate 12 and the detection substrate 13 are made of silicon. The connection substrate 14 contains movable ions therein and is made of glass, e.g., Pyrex (registered trademark) having a thermal expansion coefficient equivalent to that of silicon.

Then, the base substrate 12, the detection substrate 13 and the connection substrate 14 are processed to have predetermined shapes, respectively. The base substrate 12 and the detection substrate 13 can be processed by a semiconductor process, to be specific, a lithography technique such as an etching process. For example, in case of forming the column flow path 15, a mask pattern of the pillars 17 is transcribed onto the main surface 12a of the base substrate 12 and a portion to be the groove 16 is removed by an etching process. Furthermore, the sidewalls 13a and 13b and the V-shaped grooves 13c and 13d of the detection substrate 13 can be formed by performing an anisotropic etching. Meanwhile, in the connection substrate 14, the connection flow paths 14a to 14d are formed by a sand blast process or the like.

Subsequently, the base substrate 12 and the connection substrate 14, and the detection substrate 13 and the connection substrate 14 are bonded together by an anodic bonding, respectively. In addition, as other methods for bonding the base substrate 12 to the connection substrate 14, and the detection substrate 13 to the connection substrate 14, a metal welding or a UV adhesive may be employed, for example.

Furthermore, the connection substrate 14 is connected with the supply cylinder 19 and the discharge cylinder 20. The connection method is not specially limited, and the anodic bonding can be employed. Further, in the above-stated embodiment, there has been illustrated an example of forming the detection substrate 13 as a separate member from the supply cylinder 19 and the discharge cylinder 20, but it is not limited thereto, and they may be formed as one body.

Hereinafter, with reference to Fig. 5, there will be explained a modification example of the chromatography detector 11. Further, the upper side of Fig. 5 shows a partial cross-sectional view of the modification example of the chromatography detector 11, and the lower side shows a partial plane view thereof. Here, the same components as those of Figs. 1 to 4 are assigned with the same reference numerals, and the descriptions thereof will be omitted.

With reference to Fig. 5, the column flow path 15 formed at the main surface 12a of the base substrate 12 is composed of the groove 16, a catalyst metal layer 38 formed on the bottom wall of the groove 16, and a plurality of carbon nanotubes (referred to as ┌CNT┘) 37 serving as an obstacle protruding upwardly from a top surface of the catalyst metal layer 38. Further, the catalyst metal layer 38 can be made of, e.g., iron (Fe), nickel (Ni) or the like.

A manufacturing method of the chromatography detector 11 having the above configuration will be explained. Further, the descriptions of the same procedures as the above-stated manufacturing method will be omitted, and the descriptions of the different procedures will be mainly explained.

First, the groove 16 is formed by performing a dry etching or a wet etching on the main surface 12a of the base substrate 12. Subsequently, the catalyst metal layer 38 is formed on the bottom wall of the groove 16 by a sputtering or the like. This catalyst metal layer 38 serves as a seed for growing the CNT 37.

Thereafter, the base substrate 12 is bonded to the connection substrate 14. In the same manner as the above-stated method, the anodic bonding may be employed as the bonding method. Then, the CNTs 37 are formed on the top surface of the catalyst metal layer 38 by a thermal CVD method or the like. To be specific, a stacked structure of the base substrate 12 and the connection substrate 14 is put into a thermal CVD apparatus, and methane gas (CH₄) or acetylene gas (C₂H₂) serving as a reactant gas is injected. The reactant gas and the catalyst metal chemically react with each other under a predetermined condition (temperature, pressure or the like), and the CNTs 37 are selectively grown on the top surface of the catalyst metal layer 38.

It is possible to achieve the effect of the present invention by using the chromatography detector 11 having the above configuration. Further, on the top surface of the catalyst metal layer 38, there are formed the CNTs 37 at a distance of several tens of nm. In this manner, by densely forming the CNTs 37 serving as a stationary phase, resolution of the chromatography detector 11 is much more enhanced.

The chromatography detector 11 in accordance with the embodiment of the present invention can be used when the sample (mobile phase) to be detected is liquid or gas. Further, by employing the present invention to the chromatography detector having a subminiature size, a higher advantageous effect can be anticipated. However, this does not imply that the present invention may not be adopted to the chromatography detector having a medium or large size.

The scope of the present invention is defined by the following claims rather than by the detailed description of the embodiment. It shall be understood that all modifications and embodiments conceived from the meaning and scope of the claims and their equivalents are included in the scope of the present invention.

### [Industrial Applicability]

The present invention can be utilized advantageously in a chromatography detector.

## Claims

1. A chromatography detector comprising:
a base substrate having a main surface and a column flow path formed on the main surface; and
a substrate block, which receives a detection module and has a detection space communicating with an outlet of the column flow path and is stacked on the main surface of the base substrate so as to close a top surface of the column flow path.

2. The chromatography detector of claim 1, wherein the column flow path includes a groove and an obstacle disposed within the groove.

3. The chromatography detector of claim 2, wherein the column flow path is formed by a semiconductor process.

4. The chromatography detector of claim 2, wherein the obstacle is a plurality of pillars protruding from a wall surface of the groove.

5. The chromatography detector of claim 2, wherein the obstacle is a plurality of carbon nanotubes protruding from a wall surface of the groove.

6. The chromatography detector of claim 1, wherein the substrate block includes:
a detection substrate having the detection space; and
a connection substrate, which is disposed between the base substrate and the detection substrate and has a connection flow path for connecting the outlet of the column flow path with an inlet of the detection space.

7. The chromatography detector of claim 6, wherein the base substrate and the detection substrate are made of silicon,
the connection substrate is made of glass containing movable ions, and
at least one of the base substrate and the connection substrate, and the detection substrate and the connection substrate is bonded by an anodic bonding.

8. The chromatography detector of claim 1, further comprising:
a detection module, which has a detection flow path where a mobile phase passes through and is detachably held in the detection space.

9. The chromatography detector of claim 8, wherein the detection module measures absorbance or electrical conductivity of the mobile phase passing through the detection flow path.

10. The chromatography detector of claim 8, wherein wall surfaces of the substrate block and sidewalls of the detection module surrounding the detection space are inclined at predetermined angles with respect to an entering direction of the detection module, respectively.
